Europäisches Patentamt

European Patent Office

Office européen des brevets

(19)

(11) **EP 1 482 652 A1**

(12) **EUROPEAN PATENT APPLICATION**

(43) Date of publication:
**01.12.2004 Bulletin 2004/49**

(51) Int Cl.⁷: **H04B 1/707**

(21) Application number: **03388041.0**

(22) Date of filing: **27.05.2003**

| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br>• **Reial, Andres**<br>  **222 41 Lund (SE)**<br>• **Lindoff, Bengt**<br>  **237 36 Bjärred (SE)** |
|---|---|
| (71) Applicant: **Telefonaktiebolaget LM Ericsson**<br>**(publ)**<br>**164 83 Stockholm (SE)** | (74) Representative: **Boesen, Johnny Peder et al**<br>**Zacco Denmark A/S**<br>**Hans Bekkevolds Allé 7**<br>**2900 Hellerup (DK)** |

(54) **Triggering a path searcher**

(57)   Multipath components of a signal transmitted through a time-varying digital radio channel are received with individual delays. The delays ($\tau$) and a magnitudes ($g(\tau)$) of the individual multipath components are estimated, and a search is performed repetitively for new multipath components. Changes are detected in the magnitude ($g(\tau)$) of each individual multipath component for which the individual delay and the magnitude are currently estimated; and a search is triggered for new multipath components in dependence of a change in the magnitude of any one of said currently estimated individual multipath components. In this way, a receiver that can ensure that a search for new paths is initiated before serious degradation occurs in the receiver, is provided. Simultaneously, the power consumption and signal processing resources of the path searcher can be reduced compared to a fixed regular path searcher schedule having a frequency sufficiently high to ensure a similar performance.

Received signal

Fig. 6

**Description**

Technical Field of the Invention

The invention relates to a method of detecting multipath components in a time-varying fading radio channel in a digital wireless communications system in which individual multipath components of a signal transmitted through said channel are received with individual delays, and the method comprises the steps of estimating said individual delays and a magnitude of each individual multipath component repetitively at a first rate; and searching repetitively at a rate lower than said first rate for new multipath components. The invention further relates to a receiver having means for detecting multipath components in a time-varying fading radio channel.

Description of Related Art

In wireless communications systems the physical channel between a transmitter and a receiver is typically formed by a radio link. As an example, the transmitter could be a base station, and the receiver could be a mobile station, or vice versa. In most cases the transmit antenna is not narrowly focused towards the receiver. This means that the transmitted signals may propagate over multiple paths. In addition to a possible direct path from the transmitter to the receiver, many other propagation paths caused by reflections from objects in the surroundings exist. Thus, the receiver may receive multiple instances of the same signal at different times, i.e. with different delays, because different portions of the signal are reflected from various objects, such as buildings, moving vehicles or landscape details.

These different portions of the signal are a cause of interference in the receiver. Depending on the time resolution of the transmission system and the instantaneous phase relationship, portions with similar propagation distances combine at the receiver and form a distinct multipath component. The effect of the combining depends on the instantaneous relationship of the carrier wavelength and distance differences, and it may thus for a given multipath component be either enhancing or destructive. In case of destructive interference, the combining leads to significant decrease of the magnitude, or fading, of the path gain for that path.

This interference is treated differently in different transmission systems. Many transmission systems try to reduce the effect of multipath propagation and fading by using receivers that combine the data symbol energy from all multipath components. In Code Division Multiple Access (CDMA) and Wideband Code Division Multiple Access (WCDMA) systems the energy of the different received portions of the signal may be utilized in the receiver by using a so-called RAKE receiver.

In these systems spreading and despreading is used. Data are transmitted from the transmitter side using a spread spectrum modulation technique wherein the data are scattered across a wide range of frequencies. Each channel is assigned a unique spreading code that is used to spread the data across the frequency range. The spreading code is a pseudo-random noise (PN) code and is composed of symbols corresponding to a binary sequence of 1's and 0's, called "chips", that are distributed in a pseudo-random manner and have noise-like properties. The number of chips used to spread one data bit, i.e. chips/bit, may vary, and it depends, at least in part, on the data rate of the channel and the chip rate of the system.

In the receiver the received signal must be despread and demodulated with the same spreading code using the same chip rate to recover the transmitted data. Furthermore, the timing of the demodulation must be synchronized, i.e. the despreading code must be applied to the received signal at the correct instant in time, which can be difficult due to the multipath effects mentioned above. The performance of a CDMA receiver is improved if the signal energy carried by many multipath components is utilized. This is achieved by using a RAKE receiver, where each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate.

Thus the RAKE receiver requires knowledge of the multipath delays and the values of the channel impulse response for all paths. To achieve the best possible signal-to-noise ratio (SNR) at the output of the RAKE combiner, the signal energy from as many physical paths as possible should be collected. In addition, tracking as many different physical paths as possible (higher utilized diversity) significantly increases the robustness of reception, since this reduces the probability of a simultaneous deep fade of all paths, a phenomenon leading to serious degradation of the block error rate (BLER).

The structure of the propagation channel, i.e. the absolute and relative delays of the individual multipath components, does not remain constant over time. Due to relative movement of the transmitter, the receiver and the objects in their vicinity, the delays of existing paths change, old paths disappear and new paths appear. In addition, the frequency offset between the transmitter and receiver circuits gives rise to a slow clock drift, which manifests itself as a gradual movement of the whole delay profile along the time axis. To ensure proper operation of the RAKE receiver, the changing delays of all known multipath components should be tracked, and new paths should be discovered quickly after they appear.

The tracking of already known multipath components is typically handled by a delay estimator, while a path searcher may be run periodically over the range of possible delays to ensure the capture of all available paths, including newly appeared paths that are currently not tracked. Thus, in a practical delay estimation system the path searcher stage is used periodically to re-scan the delay range with the purpose of detecting new paths. Thus, when a general delay estimation algorithm is used, which is able to extract the path positions and find their delays with sufficient accuracy once they are discovered by the path searcher, the main task of the path searcher is to detect newly appeared paths. The use of a path searcher will guarantee reliable new path detection and provide good signal energy capture when the path searcher is used very frequently, but this approach is usually not practically feasible because of power consumption and signal processing resource limitations.

Therefore, the power consumption and signal processing resources of the path searcher need to be reduced, which can be obtained in different ways. Typical implementations use path searchers with observation windows shorter than the full search area. In addition, the path searcher resolution may be reduced and additional densely-sampled windows of despreaders may be used that produce higher-resolution estimates of certain areas of the delay profile.

Another way of reducing the processing resources of the path searcher is to run the path search less frequently. However, in this case it is important that a situation where additional paths are likely to be present in the environment, but not yet included in the RAKE processing, does not occur. The result of such a situation would be performance degradation due to various reasons. First, a lower number of tracked paths at the receiver (utilized diversity) leads to a higher probability of their simultaneous deep fade, causing serious degradation of the BLER. Second, the signal-to-interference ratio (SIR) is decreased since the paths not detected by the path searcher act as sources of interference to the other fingers in the RAKE, while the signal energy they carry is not utilized. Therefore, a new path search should be triggered before such a situation occurs.

One way of performing the path search is of course to use a fixed regular path searcher schedule that does not use channel- or performance-related trigger signals. When the receiver is stationary or moving slowly, e.g. up to 20 km/h, the disappearance of known paths and emergence of new ones is relatively slow, and in these scenarios, a slow steady path searcher re-run schedule is sufficient to maintain an up-to-date path pattern. However, things change radically for higher speeds (e.g. upwards of 120 km/h) or when the receiver moves fast in a varied environment, such as the urban setting (e.g. driving around the corner). In these situations, the path structure may change too fast to be tracked by the regular path searcher schedule.

Therefore, for a fixed regular path searcher schedule, it is difficult to find an update frequency that provides sufficient reduction in the processing resources and at the same time ensures that new paths are detected quickly enough. US 6 373 882 suggests a system in which an environment variation estimator is connected to the path searcher and provides an estimate of the rate at which the mobile station's environment is changing. The frequency of the regular path searcher activation schedule is then adjusted according to this rate of change, i.e. the path search is updated more frequently when the environment is estimated to change faster. However, it is still a regular schedule, and the appearance of new paths is not necessarily related to the rate of change for the environment. As examples, a sudden change may occur in the propagation channel even when moving slowly in a city (e.g. driving around the corner), while the path delays on the other hand may remain relatively unchanged even when moving fast around in an open area.

A similar system is known from WO 01/17185, in which a Doppler frequency estimate is generated from two or more channel estimates provided by a channel estimate generator. The Doppler frequency estimate is used as an indicator of the relative velocity of the receiver, and it is therefore suggested to determine, based on the estimated Doppler frequency, whether searching for new paths is necessary, although this is not explained in any further detail.

Thus, to account for situations where the propagation channel changes suddenly, there is a need for external indicators that could be used to deduce that the path structure of the propagation channel has changed, and to trigger the path searcher outside its regular (slow) schedule.

Basically, we can assume that when changes in the known channel structure are detected, e.g. in the form of degradation of performance or loss of power via the known paths, then simultaneously with some paths disappearing, others will be appearing. Thus, in this situation it will, with high probability, be beneficial to run the path searcher to detect the new multipath components.

The necessity for a path searcher update can be determined in various ways; e.g. it is possible to utilize the power and/or interference estimates provided by the RAKE fingers. One way is to detect a decrease in the total received power or the signal-to-interference ratio of the receiver. Another possibility is to detect a degradation of the block error rate (BLER), assessed via cyclic redundancy check errors or the soft information quality in the channel decoder. A further possibility is to monitor the interference levels at the individual RAKE fingers.

While the detailed implementation of such methods is varied, the common feature of these approaches is their dependence on a composite measure that depends on the whole channel structure, i.e. usually the channel structure or the resulting decoder performance must change significantly before these changes can be detected.

When such methods for detecting channel changes are utilized, the figures of merit are affected by many, or all, components of the presently tracked channel. Thus, the thresholds of triggering the path searcher are usually not sensitive to changes in a single path, but are activated when many path components have changed, or, in practice, weakened. This way, a new path searcher run is activated only after serious degradation of the match between the assumed and the true channels has already occurred and often its effects are felt in the overall BLER performance.

Therefore, it is an object of the invention to provide a method that can ensure that a search for new paths is initiated before serious degradation occurs in the receiver, i.e. it should avoid significant effects on the BLER performance before new paths are found. At the same time the power consumption and signal processing resources of the path searcher should be reduced compared to a fixed regular path searcher schedule having a frequency sufficiently high to ensure a similar performance.

Summary

According to the invention the object is achieved in that the method comprises the steps of detecting changes in the magnitude of each individual multipath component for which the individual delay and the magnitude are currently estimated; and triggering a search for new multipath components in dependence of a change in the magnitude of any one of said currency estimated individual multipath components.

By triggering a search for new paths based on changes in the magnitude of just one of the currently known individual paths, a much more sensitive trigger mechanism is achieved, resulting in a more expedient update of the power delay profile and incorporation of the new multipath components in RAKE processing. Further, unnecessary path searcher runs are avoided when the currently known individual paths only show changes consistent with the regular fading pattern.

The implementation of the method is conceptually simple, since each path (finger) is processed separately, and no joint computation of any figure of merit is necessary. The computational complexity of the method is small, requiring only a few operations per each new channel estimate. This may be considered insignificant compared to the channel estimation computation itself.

The triggering step may be performed when at least one of said currently estimated magnitudes is significantly reduced for a period exceeding a known duration of an average fading period, since such a reduction indicates that the channel structure has changed and a search for new paths is appropriate.

In one embodiment, the method further comprises the steps of estimating from said currently estimated magnitudes a typical fading period for said radio channel, providing repetitively an averaged value of the estimated magnitude for each currently estimated individual multipath component, said averaged value being averaged over a period longer than said fading period, comparing said averaged value to a previously provided averaged value for the same multipath component, and performing said triggering step when the averaged value, compared to the previously provided averaged value, is reduced by a predetermined amount. Using averaged or filtered path magnitudes removes fluctuations due to fading and avoids, or reduces the number of, false alarms due to magnitude decreases arising from fading only. When an averaged power delay profile approach is employed for delay estimation, the averaged nature of the path magnitude estimates makes it relatively simple to detect a disappearance of a path in the channel structure. No absolute magnitude or power thresholds are used, but instead relative changes in the path coefficient are detected, which makes the method applicable to arbitrary channel conditions without a change of parameters. Further, no assumptions are made about the probability distribution of the fading process.

In another embodiment, the method further comprises the steps of estimating from said currently estimated magnitudes a typical fading period for said radio channel, providing a reference level from a number of repetitively estimated magnitudes for each currently estimated individual multipath component, comparing for each currently estimated individual multipath component the estimated magnitude to said reference level, and performing said triggering step when the estimated magnitude is lower than a predetermined fraction of said reference level for a time period exceeding a time period proportional to said typical fading period. Using the instantaneous path magnitude as it is, speeds up the detection. Only a time period slightly exceeding one fading cycle is required before the loss of a path is declared and the path searcher may be activated. The very first signs of the channel changes are utilized for detection, and there is no need to wait for more structural changes which by the time of their detection already adversely affect the performance.

No absolute magnitude or power thresholds are used, but instead relative changes in the path coefficient are detected, which makes the method applicable to arbitrary channel conditions without a change of parameters. Further, no assumptions are made about the probability distribution of the fading process.

Expediently, the method may further comprise the step of providing the reference level as the highest of a number of repetitively estimated magnitudes.

When the method further comprises the step of filtering said currently estimated magnitudes with a filter time constant less than said typical fading period, the signal-to-noise ratio can be improved.

The method may further comprise the step of estimating the typical fading period by means of a Doppler estimate.

In a further embodiment, the method further comprises the steps of predicting future values of the magnitudes for each currently estimated individual multipath component from previous values of the magnitudes for the same multipath component, comparing for each currently estimated individual multipath component the estimated magnitude to the predicted value, and performing said triggering step when the estimated magnitude deviates from the predicted value by a predetermined amount. This embodiment is expedient when the relative movement of the transmitter and the receiver is slow, because then the fading changes slowly as well.

The magnitudes for each individual multipath component may be estimated as path signal-to-interference ratio estimates.

As mentioned, the invention further relates to a receiver having means for detecting multipath components in a time-varying fading radio channel in a digital wireless communications system in which individual multipath components of a signal transmitted through said channel are received with individual delays. The receiver comprises means for estimating said individual delays and a magnitude of each individual multipath component repetitively at a first rate; and means for searching repetitively at a rate lower than said first rate for new multipath components. When the receiver further comprises means for detecting changes in the magnitude of each individual multipath component for which the individual delay and the magnitude are currently estimated; and means for triggering a search for new multipath components in dependence of a change in the magnitude of any one of said currently estimated individual multipath components, a receiver that can ensure that a search for new paths is initiated before serious degradation occurs in the receiver, is provided. At the same time the power consumption and signal processing resources of the path searcher can be reduced compared to a fixed regular path searcher schedule having a frequency sufficiently high to ensure a similar performance.

The triggering means may be adapted to trigger a search for new multipath components when at least one of said currently estimated magnitudes is significantly reduced for a period exceeding a known duration of an average fading period, since such a reduction indicates that the channel has changed and a search for new paths is appropriate.

In one embodiment, the detecting means may be adapted to estimate from said currently estimated magnitudes a typical fading period for said radio channel, provide repetitively an averaged value of the estimated magnitude for each currently estimated individual multipath component, said averaged value being averaged over a period longer than said fading period, and compare said averaged value to a previously provided averaged value for the same multipath component, and said triggering means may be adapted to trigger a search for new multipath components when the averaged value, compared to the previously provided averaged value, is reduced by a predetermined amount. Using averaged or filtered path magnitudes removes fluctuations due to fading and avoids, or reduces the number of, false alarms due to magnitude decreases arising from fading only. When an averaged power delay profile approach is employed for delay estimation, the averaged nature of the path magnitude estimates makes it relatively simple to detect a disappearance of a path in the channel structure. No absolute magnitude or power thresholds are used, but instead relative changes in the path coefficient are detected, which makes the method applicable to arbitrary channel conditions without a change of parameters. Further, no assumptions are made about the probability distribution of the fading process.

In another embodiment, the detecting means may be adapted to estimate from said currently estimated magnitudes a typical fading period for said radio channel, provide a reference level from a number of repetitively estimated magnitudes for each currently estimated individual multipath component, and compare for each currently estimated individual multipath component the estimated magnitude to said reference level, and said triggering means may be adapted to trigger a search for new multipath components when the estimated magnitude is lower than a predetermined fraction of said reference level for a time period exceeding a time period proportional to said typical fading period. Using the instantaneous path magnitude as it is speeds up the detection. Only a time period slightly exceeding one fading cycle is required before the loss of a path is declared and the path searcher may be activated. The very first signs of the channel changes are utilized for detection, and there is no need to wait for more structural changes which by the time of their detection already adversely affect the performance. No absolute magnitude or power thresholds are used, but instead relative changes in the path coefficient are detected, which makes the method applicable to arbitrary channel conditions without a change of parameters. Further, no assumptions are made about the probability distribution of the fading process.

Expediently, the detecting means may be adapted to provide said reference level as the highest of a number of repetitively estimated magnitudes.

When the detecting means are adapted to filter said currently estimated magnitudes with a filter time constant less than said typical fading period, the signal-to-noise ratio can be improved.

The detecting means may be adapted to estimate said typical fading period by means of a Doppler estimate.

In a further embodiment, the detecting means may be adapted to predict future values of the magnitudes for each currently estimated individual multipath component from previous values of the magnitudes for the same multipath component, and compare for each currently estimated individual multipath component the estimated magnitude to the predicted value, and said triggering means may be adapted to trigger a search for new multipath components when the estimated magnitude deviates from the predicted value by a predetermined amount. This embodiment is expedient when the relative movement of the transmitter and the receiver is slow, because then the fading changes slowly as well.

The estimating means may be adapted to estimate said magnitudes for each individual multipath component as path signal-to-interference ratio estimates.

Further, the receiver may expediently be adapted for use in a Code Division Multiple Access system or a Wideband Code Division Multiple Access system.

Brief Description of the Drawings

The invention will now be described more fully below with reference to the drawings, in which

figure 1 shows an example of multiple paths between a base station and a mobile station,

figure 2 shows a power delay profile for the paths illustrated in figure 1,

figure 3 illustrates the use of a path searcher in combination with a RAKE receiver,

figure 4 shows a sampled power delay profile corresponding to the profile shown in figure 2,

figure 5 shows a flow chart illustrating the steps of a general path searcher activation scheme,

figure 6 shows a block diagram of a path searcher trigger according to the invention,

figure 7 shows a flow chart of a path searcher trigger according to the invention,

figure 8 shows a flow chart of a first embodiment of a detection algorithm according to the invention,

figure 9 shows a flow chart of a second embodiment of a detection algorithm according to the invention, and

figure 10 shows a flow chart of a third embodiment of a detection algorithm according to the invention.

Detailed Description of Embodiments

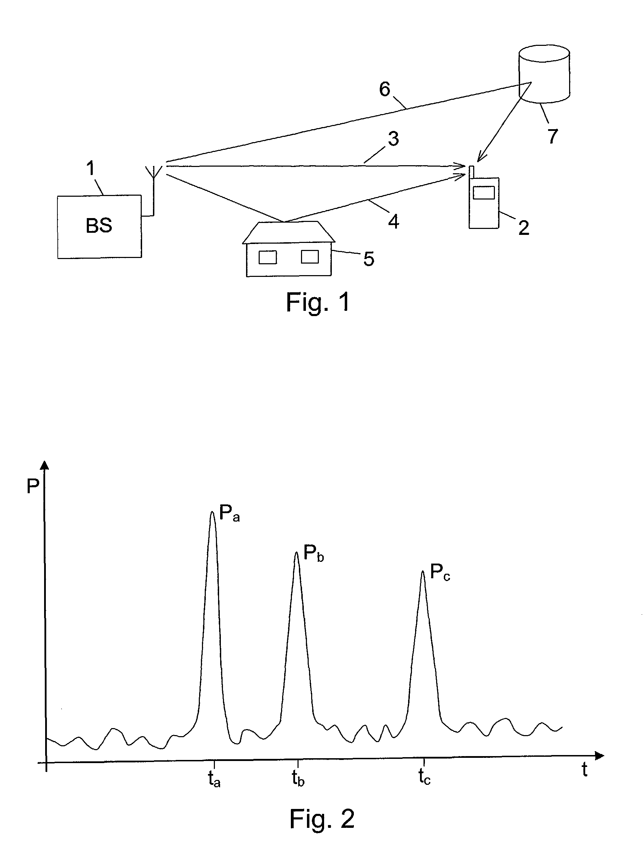

Figure 1 shows a situation in which a base station 1 and a mobile station 2 of a wireless communications system communicate with each other. As an example, a signal transmitted from the base station 1 is received by the mobile station 2. However, the transmitted signal travels along multiple paths from the base station to the mobile station. In this case there is a direct and unobstructed propagation path 3, but in addition to this direct path, reflections from objects in the surroundings cause a number of indirect paths to exist. Two such paths are shown in the figure. One indirect path 4 is reflected from a house 5, while another path 6 is caused by reflection from another building 7.

Since the part of a signal transmitted via one of the indirect paths 4 and 6 has to travel a longer distance to arrive at the mobile station 2, compared to the part of the signal travelling via the direct path 3, multiple instances of the same signal will be received by the mobile station 2 at different times, i.e. with different delays.

Thus, if a pilot signal is transmitted from the base station 1, the power P received at the mobile station 2 as a function of the time t may look as illustrated in figure 2, which shows an example of a power delay profile. The power delay profile shows all signals received at the mobile station, including noise and interference signals. However, only the peaks in the power delay profile correspond to the multipath components of the transmitted signal. Together these peaks form the impulse response of the channel. In figure 2 the peak $P_a$ received at the time $t_a$ corresponds to the direct path 3 in figure 1, while the peaks $P_b$ and $P_c$ received at the times $t_b$ and $t_c$, respectively, correspond to the indirect paths 4 and 6 in figure 1. Thus, as an example, it is seen that the delay of the path 6 (corresponding to the peak $P_c$) is larger than the delay of the path 3 (corresponding to the peak $P_a$).

The mobile station 2 and the base station 1 may be adapted for use in e.g. a Code Division Multiple Access (CDMA) system or a Wideband Code Division Multiple Access (WCDMA) system, and in that case the mobile station 2 may use a RAKE receiver, which is capable of identifying and tracking the various multipath signals for a given channel. In this way the energy or power of several multipath components can be utilized in the receiver. As mentioned above, this may be achieved by using a RAKE receiver, where each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate.

Thus the RAKE receiver requires knowledge of the multipath delays and the values of the channel impulse response for all paths. The signal energy from as many physical paths as possible should be collected.

Although reference is here made to a RAKE receiver in a mobile station, it should be noted that the algorithms described below may be used at any CDMA receiver, i.e. in a mobile station or a base station, and the transmission may be uplink or downlink.

Since the structure of the propagation channel does not remain constant over time, the delays of existing paths change, old paths disappear and new paths appear. The changing delays of all known multipath components should be tracked, and new paths should be discovered quickly after they appear.

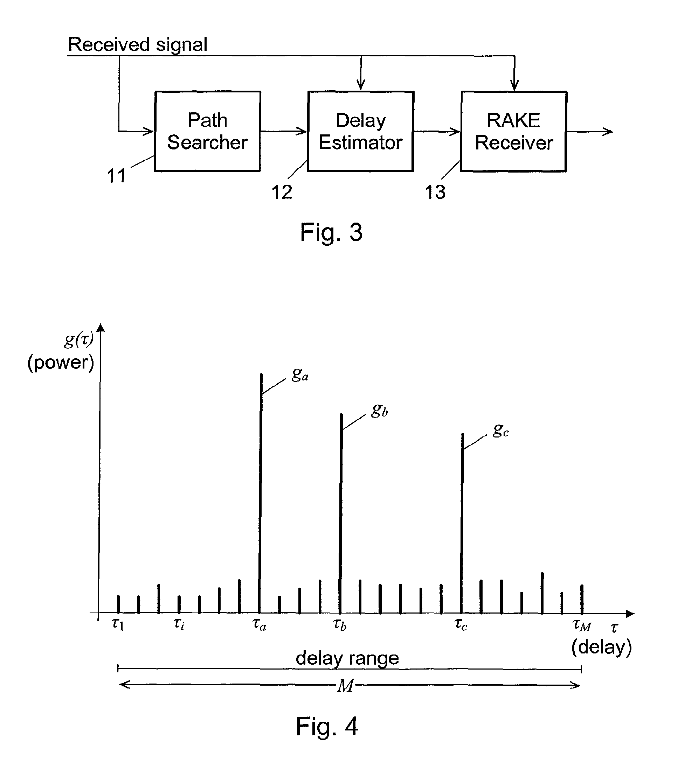

In order to estimate the path delays in the RAKE receiver, the impulse response of the channel could be evaluated over the whole range of possible delays in the channel, and the resulting delay profile could then be subjected to peak detection and the peak locations reported to the RAKE receiver as the delay estimates. However, the processing and power consumption of executing such a full path searching routine frequently is usually so high that it cannot be realized in a practical system. Therefore, path searchers are typically used for detecting new paths and changed delays of existing paths. This is illustrated in figure 3, in which a path searcher 11 is used in combination with a RAKE receiver 13.

The path searcher 11 is a device that repetitively computes instantaneous impulse response estimates (complex or power) over a range of delays allowed by the system. Since the path searcher 11 is mainly used only to detect the existence of paths, its output resolution may be lower than that required by the RAKE receiver 13. The RAKE receiver 13 itself uses a general delay estimation algorithm 12, which is able to extract the path positions and find their delays with sufficient accuracy, once they are discovered by the path searcher 11.

Typically, the delay profile of the received signal will not be available as a continuous curve as the one illustrated in figure 2. Instead, it will consist of a number of sample values. This is illustrated in figure 4, which shows a sampled power delay profile corresponding to the continuous delay profile shown in figure 2. For each delay value $\tau_i$, the corresponding power value $g(\tau_i)$ is shown. In this case the available estimates of the power delay profile constitutes a contiguous sequence of equally spaced samples, $\tau_i = \tau_0 + i\Delta\tau$. Thus the power values $g_a$, $g_b$ and $g_c$ at the delay values $\tau_a$, $\tau_b$ and $\tau_c$ correspond to the peaks $P_a$, $P_b$ and $P_c$ shown in figure 2.

As mentioned, the path searcher 11 performs a search for new paths repetitively. Often, this is done periodically according to the fixed regular path searcher schedule, but in order to reduce the power consumption and the signal processing resources new searches should be performed at a relatively low frequency compared to the general delay estimator 12. A slow schedule is sufficient when the channel only changes slowly, but in case of fast changes in the channel a new path may suddenly appear, and the RAKE combiner will not be able to take this new path into account before it is found in the next run of the path searcher. Therefore, the RAKE performance may be improved by initiating an additional search in this situation. This can be done by detecting the situation where additional paths are likely to be present in the environment that are not presently included in RAKE processing.

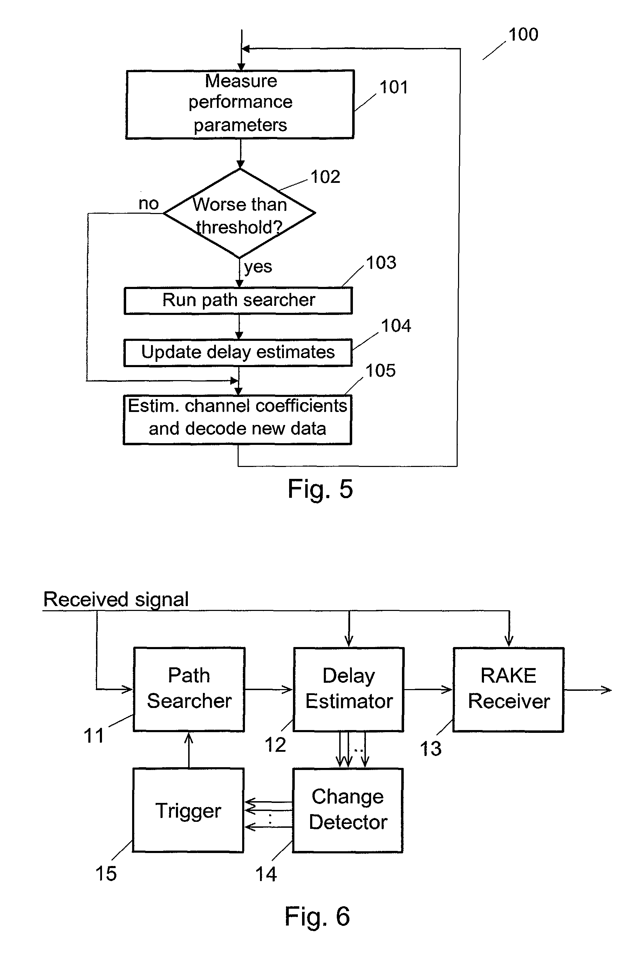

A general structure of such a path searcher activation scheme is shown in the flow chart 100 in fig. 5. In step 101 the figures of merit, such as the RAKE signal-to-interference ratio, the coded block error rate or other performance parameters, are measured, and in step 102 the measured parameters are compared to a threshold. If the parameter changes are below the threshold, the receiver just continues with the next channel coefficient estimation (step 105) in the general delay estimator 12. If, however, the changes are above the threshold, the path searcher is activated in step 103, and the delay estimates are updated correspondingly in step 104.

The detailed implementation of such methods may vary, but a common feature of the approach is the dependence on a composite measure that depends on the whole channel structure, i.e. usually the channel structure or the resulting decoder performance must change significantly before these changes can be detected.

When the method of figure 5 for detecting channel changes is utilized, the figures of merit are affected by many, or all, components of the presently tracked channel. Thus, the thresholds of triggering the path searcher are usually not sensitive to changes in a single path, but are activated when many path components have changed, or, in practice, weakened. This way, a new path searcher run is activated only after serious degradation has already occurred and often its effects are felt in the overall BLER performance.

To improve the response of the path searcher trigger mechanism, and to avoid significant effects on the BLER performance before new paths are found, a path searcher activation signal is suggested that may be triggered by changes in individual paths, since some paths start changing before others. This results in a more expedient update of the power delay profile and incorporation of the new multipath components in RAKE processing.

The suggested trigger mechanism will observe the fading patterns of the individual paths and provide a path searcher activation signal if the magnitudes of one or more paths are reduced quickly or unpredictably, indicating that the channel structure is about to change.

The mechanism is an algorithm that uses as inputs the power estimates of the individual paths that are currently tracked by the delay estimation stage 12, and detects changes (power reduction) in them. When the power reduction is sudden and permanent, indicating that the path has disappeared or it has been significantly attenuated, a signal to that effect is output, implying the opportunity to detect new paths in the channel structure. The trigger mechanism can also be expressed as an apparatus where a detection algorithm is applied to several paths in parallel, the signals are used jointly, and an activation signal is generated for the path searcher stage 11. This is illustrated in figure 6, where the change detector 14 detects changes in each path estimated by the delay estimator 12. In the trigger device 15 it is decided if at least one of the changes detected in the change detector 14 is sufficient to generate a signal triggering a search for new paths, and, if so, this signal is supplied to the path searcher 11.

Change in any one path is capable of triggering the path searcher. Thus the individual paths are monitored separately, but the signals generated by them may be used in parallel to trigger a path searcher activation. This means that the algorithms are applied to each individual path, and the path searcher is triggered when any of them, or several, indicates channel changes.

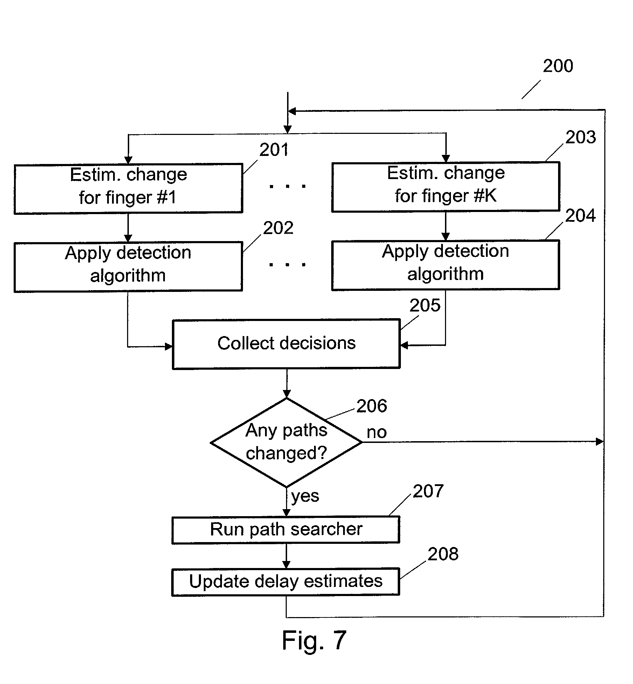

This is illustrated in the flow chart 200 in figure 7. In step 201 the change for the first path or finger is estimated, and in step 202 a detection algorithm is applied to detect if the change for that path is to generate the signal triggering a search for new paths. The same two steps are performed in parallel for all the other paths currently tracked by the delay estimator, which is illustrated with the steps 203 and 204 for the k'th path. In step 205 the decisions from all the detection algorithms are collected. If a change is detected for any path (step 206) a search for new paths is initiated in step 207, and the delay estimates are updated in step 208.

The detection algorithm of steps 202 and 204 can be performed in different ways, of which some examples are described below.

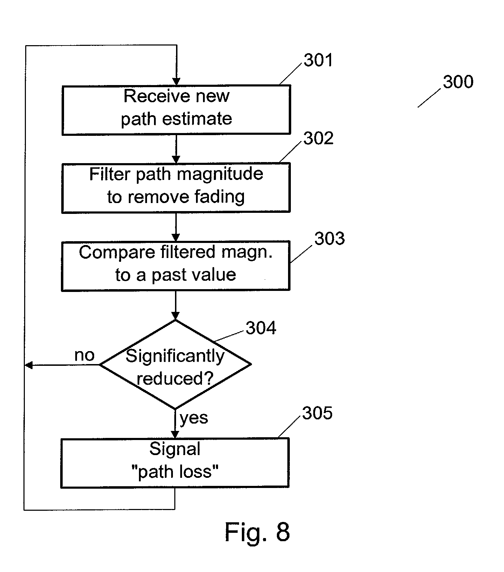

First, the detection may be performed with filtered or averaged path magnitudes. The instantaneous magnitude of the path may be filtered to remove the fluctuations due to fading and to avoid false alarms due to magnitude decreases arising from fading only. The filtering time constant may be chosen based on the estimate of the average fading rate (Doppler spread). The dynamics of the filtered magnitude are then observed and when the magnitude drops significantly during a short time interval, it may be deduced that the physical path has disappeared. The time intervals and thresholds in question may be system-specific. This is illustrated in the flow chart 300 in figure 8, where the new path estimate is received in step 301. The path magnitude is then filtered, as will be described in detail below, in step 302 to remove reductions caused by fading. In step 303 the filtered magnitude is then compared to a past value, and if it is significantly reduced (step 304), the signal "path loss" that initiates a search for new paths is generated in step 305.

When an averaged power delay profile approach is employed for delay estimation, the averaged nature of the path magnitude estimates makes it relatively simple to detect a disappearance of a path in the channel structure. We assume that proper tracking is implemented as part of the delay estimation algorithm, i.e. the identity of a certain path is maintained over time and many fading cycles.

The slot period can be denoted by $t_s$ seconds and the "typical" period of the fading process by $t_f$ seconds

$$(t_f \approx \frac{1}{\hat{f}_d}, \text{ where } \hat{f}_d \text{ is the Doppler spread estimate}).$$

Let the $k$-th path magnitude estimate at slot $i$ be given by $\hat{h}_k^{(i)}$, and let its value be the result of averaging over approximately $M$ fading cycles, or $N_a = \frac{Mt_f}{t_s}$ slots. In practice, the averaging period $N_a$ is chosen with the help of the Doppler estimate:

$$N_a = \frac{\alpha}{\hat{f}_d}$$

, where $\alpha$ is a system-dependent proportionality factor chosen e.g. as $\alpha = \frac{M}{t_s}$.

If $M$ is large enough, e.g. $M \geq 3$, the magnitude fluctuation due to instantaneous fading will be small. The disappearance of an existing, $k$-th, path may then be detected by comparing the estimates that are sufficiently separated in time:

$$\frac{\overset{\wedge}{h}_k^{(i)}}{\overset{\wedge}{h}_k^{(i-N)}} < \tau.$$

The observation interval $N$ should exceed the averaging time constant, e.g. $N > 2N_a$. (It will also need to be larger than several fading periods, but a judicious choice of $M$ will ensure this.) The threshold $\tau$ should be chosen heuristically. In an advanced implementation, it could depend on the signal-to-interference ratio for the given path (which affects the dynamic range of the estimate $\overset{\wedge}{h}_k^{(i)}$ ) and on the choice of $\alpha$ (which affects the ripple in the filtered estimate).

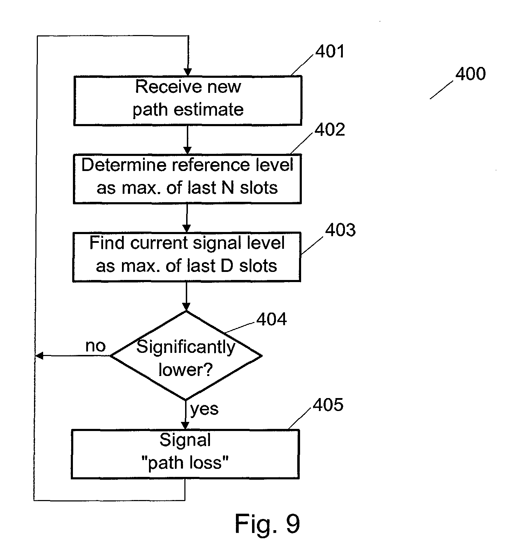

Second, the detection may be performed with the instantaneous path magnitudes. It will speed up the detection if the instantaneous path magnitude is used as it is, or with only minor filtering to improve its signal-to-noise ratio, but with the filter cut-off rate higher than the average fading rate. The duration of the time that the path magnitude remains below a threshold is compared to the average fading period, and if the path magnitude remains lower for a significantly longer time, a loss of the path may be signalled. This is illustrated in the flow chart 400 in figure 9, where the new path estimate is received in step 401. A reference level is then determined, as will be described in detail below, in step 402. In step 403 the current signal level is then found, and if the current signal level is significantly lower than the reference level (step 404), the signal "path loss" that initiates a search for new paths is generated in step 305.

When using instantaneous path magnitudes, their values at a given point in time cannot be used directly to deduce a disappearance of the path, because the instantaneous effects of fading and structural changes in the channel cannot be distinguished. Instead, we observe the path magnitude over time and make decisions based on the duration of the fading dips. Some smoothing is still recommended to improve the decision signal-to-noise ratio, but the filter time constant should be only a fraction of the average fade period $t_f$, e.g. $M=0.1$.

Since fading is non-deterministic and the average path magnitude changes over time even while the path is present, the reference value for the peaks of the fading process should be adjusted over time. Denote the length of the observation period as N slots, as before. Set the reference peak value for the $i$-th slot

$$g_k^{(i)} = \max_{j \in (i-N,i]} \overset{\wedge}{h}_k^{(i)}.$$

Next, we determine a proper threshold for a significant fading event as $\tau$, and the maximal duration of the magnitude decrease that would still be considered fading as $D$ [slots]. We then detect the sudden loss of the $k$-th path when the path magnitude has remained below the threshold for sufficiently long,

$$\frac{\max_{j \in [i-D,i]} \overset{\wedge}{h}_k^{(i)}}{g_k^{(i)}} < \tau.$$

The choice of the parameters $N$, $\tau$, and $D$ will determine the detection performance. Again, a well-performing value for $\tau$ may need to be found heuristically. Choosing e.g. $D \approx 3\frac{t_f}{t_s}$ and $N \approx 10\frac{t_f}{t_s}$ may be suggested intuitively.

A third way of performing the detection algorithm of steps 202 and 204 is to use path magnitude prediction. When the relative movement of the transmitter and the receiver is slow, then the fading changes slowly as well, and a path loss detection algorithm that requires time periods comparable to the fading period duration cannot provide expedient path loss signals. For systems where such signals are required even at low speeds, an alternative method may be used that predicts the future values of a path magnitude given its recent past and some knowledge of the statistics of the fading process. The future value of the instantaneous path magnitude may be predicted based on its recent past and the known statistics of the fading process, and a change in path structure may be signalled when the observed values significantly deviate from the predictions.

At each time instant, the probabilities that the future channel estimate assumes certain values may be computed, conditioned on its recent history. When a path is stationary (i.e. not in the process of disappearing), its observed progression will coincide with the values that have relatively high predicted probabilities. On the other hand, if the path is disappearing, its observed coefficients do not follow the predictions. The match between the predictions and the observations may be expressed in the form of a figure of merit and thresholding may be applied. If the match is below the threshold, a path searcher activation signal may be generated. In practice, the decision may be based on several consecutive comparisons.

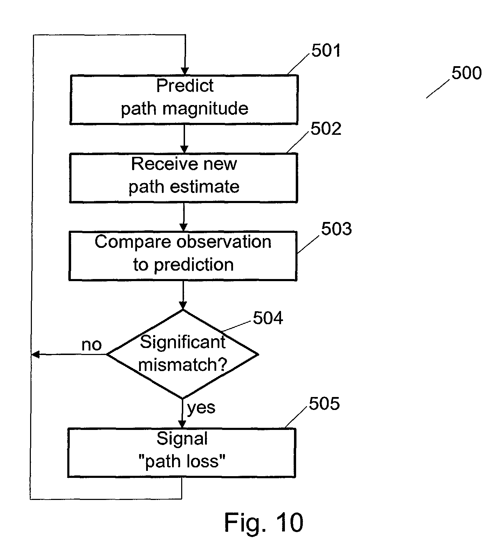

This is illustrated in the flow chart 500 in figure 10, where the path magnitude is predicted in step 501, as will be described in detail below. The new path estimate is then received in step 502. In step 503 the observed path estimate is then compared to the prediction, and if there is a significant mismatch (step 504), the signal "path loss" that initiates a search for new paths is generated in step 505.

As mentioned, the devices described above are typically adapted for use in a WCDMA system. However, the approach can be adopted at any receiver

where the individual multipath components are tracked, and channel update signals are required, e.g. any direct sequence-CDMA transmission system.

It is also noted that both complex channel coefficients and power (magnitude) estimates may be used by the algorithm. Further, path signal-to-interference estimates may be used as, or instead of, path magnitude estimates.

Also alternative formulations of thresholds and reference values for the fading/path loss decision may be used

Although a preferred embodiment of the present invention has been described and shown, the invention is not restricted to it, but may also be embodied in other ways within the scope of the subject-matter defined in the following claims.

## Claims

1. A method of detecting multipath components in a time-varying fading radio channel (3, 4, 6) in a digital wireless communications system in which individual multipath components of a signal transmitted through said channel are received with individual delays ($\tau$), the method comprising the steps of:

   - estimating said individual delays ($\tau$) and a magnitude ($g(\tau)$) of each individual multipath component repetitively at a first rate; and
   - searching repetitively at a rate lower than said first rate for new multipath components,

   **characterized in that** the method further comprises the steps of:

   - detecting changes in the magnitude ($g(\tau)$) of each individual multipath component for which the individual delay and the magnitude are currently estimated; and
   - triggering a search for new multipath components in dependence of a change in the magnitude of any one of said currently estimated individual multipath components.

2. A method according to claim 1, **characterized in that** said triggering step is performed when at least one of said currently estimated magnitudes ($g(\tau)$) is significantly reduced for a period exceeding a known duration of an average fading period.

3. A method according to claim 2, **characterized in that** the method further comprises the steps of:

   - estimating from said currently estimated magnitudes a typical fading period for said radio channel,
   - providing repetitively an averaged value of the estimated magnitude for each currently estimated individual multipath component, said averaged value being averaged over a period longer than said fading period,
   - comparing said averaged value to a previously provided averaged value for the same multipath component, and
   - performing said triggering step when the averaged value, compared to the previously provided averaged value, is reduced by a predetermined amount.

4. A method according to claim 2, **characterized in that** the method further comprises the steps of:

   - estimating from said currently estimated magnitudes a typical fading period for said radio channel,
   - providing a reference level from a number of repetitively estimated magnitudes for each currently estimated individual multipath component,
   - comparing for each currently estimated individual multipath component the estimated magnitude to said reference level, and
   - performing said triggering step when the estimated magnitude is lower than a predetermined fraction of said reference level for a time period exceeding a time period proportional to said typical fading period.

5. A method according to claim 4, **characterized in that** the method further comprises the step of providing said reference level as the highest of a number of repetitively estimated magnitudes.

**6.** A method according to claim 4 or 5, **characterized in that** the method further comprises the step of filtering said currently estimated magnitudes with a filter time constant less than said typical fading period.

**7.** A method according to any one of claims 3 to 6, **characterized in that** the method further comprises the step of estimating said typical fading period by means of a Doppler estimate.

**8.** A method according to claim 2, **characterized in that** the method further comprises the steps of:

- predicting future values of the magnitudes for each currently estimated individual multipath component from previous values of the magnitudes for the same multipath component,
- comparing for each currently estimated individual multipath component the estimated magnitude to the predicted value, and
- performing said triggering step when the estimated magnitude deviates from the predicted value by a predetermined amount.

**9.** A method according to any one of claims 1 to 8, **characterized in that** said magnitudes for each individual multipath component are estimated as path signal-to-interference ratio estimates.

**10.** A receiver (2) having means for detecting multipath components in a time-varying fading radio channel (3, 4, 6) in a digital wireless communications system in which individual multipath components of a signal transmitted through said channel are received with individual delays ($\tau$), the receiver comprising:

- means (12) for estimating said individual delays ($\tau$) and a magnitude ($g(\tau)$) of each individual multipath component repetitively at a first rate; and
- means (11) for searching repetitively at a rate lower than said first rate for new multipath components,

**characterized in that** the receiver further comprises:

- means (14) for detecting changes in the magnitude ($g(\tau)$) of each individual multipath component for which the individual delay and the magnitude are currently estimated; and
- means (15) for triggering a search for new multipath components in dependence of a change in the magnitude of any one of said currently estimated individual multipath components.

**11.** A receiver according to claim 10, **characterized in that** said triggering means (15) is adapted to trigger a search for new multipath components when at least one of said currently estimated magnitudes ($g(\tau)$) is significantly reduced for a period exceeding a known duration of an average fading period.

**12.** A receiver according to claim 11, **characterized in that** said detecting means (14) are adapted to:

- estimate from said currently estimated magnitudes a typical fading period for said radio channel,
- provide repetitively an averaged value of the estimated magnitude for each currently estimated individual multipath component, said averaged value being averaged over a period longer than said fading period, and
- compare said averaged value to a previously provided averaged value for the same multipath component, and said triggering means (15) are adapted to trigger a search for new multipath components when the averaged value, compared to the previously provided averaged value, is reduced by a predetermined amount.

**13.** A receiver according to claim 11, **characterized in that** said detecting means (14) are adapted to:

- estimate from said currently estimated magnitudes a typical fading period for said radio channel,
- provide a reference level from a number of repetitively estimated magnitudes for each currently estimated individual multipath component, and
- compare for each currently estimated individual multipath component the estimated magnitude to said reference level, and said triggering means (15) are adapted to trigger a search for new multipath components when the estimated magnitude is lower than a predetermined fraction of said reference level for a time period exceeding a time period proportional to said typical fading period.

**14.** A receiver according to claim 13, **characterized in that** said detecting means (14) are adapted to provide said reference level as the highest of a number of repetitively estimated magnitudes.

**15.** A receiver according to claim 13 or 14, **characterized in that** said detecting means (14) are adapted to filter said currently estimated magnitudes with a filter time constant less than said typical fading period.

**16.** A receiver according to any one of claims 12 to 15, **characterized in that** said detecting means (14) are adapted to estimate said typical fading period by means of a Doppler estimate.

**17.** A receiver according to claim 11, **characterized in that** said detecting means (14) are adapted to:

- predict future values of the magnitudes for each currently estimated individual multipath component from previous values of the magnitudes for the same multipath component, and
- compare for each currently estimated individual multipath component the estimated magnitude to the predicted value, and said triggering means (15) are adapted to trigger a search for new multipath components when the estimated magnitude deviates from the predicted value by a predetermined amount.

**18.** A receiver according to any one of claims 10 to 17, **characterized in that** said estimating means (12) are adapted to estimate said magnitudes for each individual multipath component as path signal-to-interference ratio estimates.

**19.** A receiver according to any one of claims 10 to 17, **characterized in that** the receiver is adapted for use in a Code Division Multiple Access system.

**20.** A receiver according to claim 19, **characterized in that** the receiver is adapted for use in a Wideband Code Division Multiple Access system.

Fig. 1

Fig. 2

Received signal

| Path Searcher | Delay Estimator | RAKE Receiver |

11        12        13

## Fig. 3

$g(\tau)$
(power)

$g_a$

$g_b$

$g_c$

$\tau_1$    $\tau_i$    $\tau_a$    $\tau_b$    $\tau_c$    $\tau_M$    $\tau$
(delay)

delay range

$M$

## Fig. 4

EP 1 482 652 A1

Fig. 5

Fig. 6

200

201
Estim. change
for finger #1

. . .

203
Estim. change
for finger #K

202
Apply detection
algorithm

. . .

204
Apply detection
algorithm

205
Collect decisions

206
Any paths
changed?

no

yes

207
Run path searcher

208
Update delay estimates

Fig. 7

301

Receive new
path estimate

302

Filter path magnitude
to remove fading

303

Compare filtered magn.
to a past value

304

Significantly
reduced?

no

yes

305

Signal
"path loss"

300

Fig. 8

Receive new
path estimate
/401

/400

Determine reference level
as max. of last N slots
/402

Find current signal level
as max. of last D slots
/403

Significantly
lower?
/404

no

yes

Signal
"path loss"
/405

Fig. 9

501

Predict
path magnitude

500

502

Receive new
path estimate

503

Compare observation
to prediction

504

no          Significant
mismatch?

yes

505

Signal
"path loss"

Fig. 10

European Patent
Office

**EUROPEAN SEARCH REPORT**

Application Number

EP 03 38 8041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 091 501 A (YOZAN INC) 11 April 2001 (2001-04-11) * abstract * * page 2, paragraph 7 * * page 3, paragraph 11 * * page 4, paragraph 22 * | 1,2,10, 11 | H04B1/707 |
| Y | * page 5, paragraph 23; claim 1 * | 3-9, 12-20 | |
| | --- | | |
| X | EP 1 067 700 A (NIPPON ELECTRIC CO) 10 January 2001 (2001-01-10) * abstract; claims 1-6; figure 8 * * page 3, line 23,30-32, paragraphs 23,27 * | 1,2,10, 11 | |
| Y | * page 7, line 35-40,54,57 * * page 8, line 7, paragraphs 70,77 * * page 9, paragraphs 88,92 * * page 10, line 8,9 * | 3-9, 12-20 | |
| | --- | | |
| D,X | US 6 373 882 B1 (OESTBERG CHRISTER ET AL) 16 April 2002 (2002-04-16) | 1,2,10, 11 | TECHNICAL FIELDS SEARCHED (Int.Cl.7) |
| Y | * abstract; claims 18,19; figure 3 * * column 4, line 62-64 * * column 5, line 40,41 * * column 6, line 28-42 * * column 7, line 22-24 * * column 8, line 13-18 * | 3-9, 12-20 | H04B |
| | --- | | |
| Y | WO 01 29982 A (ERICSSON INC) 26 April 2001 (2001-04-26) * abstract; figure 7 * * page 4, line 5 - page 6, line 8 * | 3-9, 12-20 | |
| | ----- | | |

The present search report has been drawn up for all claims

| Place of search | Date of completion of the search | Examiner |
|---|---|---|
| MUNICH | 27 October 2003 | Ricciardi, M |

EPO FORM 1503 03.82 (P04C01)

## ANNEX TO THE EUROPEAN SEARCH REPORT
## ON EUROPEAN PATENT APPLICATION NO.

EP 03 38 8041

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2003

| Patent document cited in search report | | Publication date | Patent family member(s) | | Publication date |
|---|---|---|---|---|---|
| EP 1091501 | A | 11-04-2001 | AU | 4143900 A | 10-11-2000 |
| | | | EP | 1091501 A1 | 11-04-2001 |
| | | | CN | 1310887 T | 29-08-2001 |
| | | | WO | 0065738 A1 | 02-11-2000 |
| | | | TW | 480837 B | 21-03-2002 |
| EP 1067700 | A | 10-01-2001 | JP | 2001024557 A | 26-01-2001 |
| | | | AU | 4503800 A | 11-01-2001 |
| | | | CN | 1287417 A | 14-03-2001 |
| | | | EP | 1067700 A2 | 10-01-2001 |
| US 6373882 | B1 | 16-04-2002 | AT | 235762 T | 15-04-2003 |
| | | | AU | 1433600 A | 29-05-2000 |
| | | | CN | 1333956 T | 30-01-2002 |
| | | | DE | 69906349 D1 | 30-04-2003 |
| | | | EP | 1125372 A1 | 22-08-2001 |
| | | | JP | 2002530003 T | 10-09-2002 |
| | | | WO | 0028675 A1 | 18-05-2000 |
| WO 0129982 | A | 26-04-2001 | AU | 7071300 A | 30-04-2001 |
| | | | CN | 1411635 T | 16-04-2003 |
| | | | EP | 1222747 A1 | 17-07-2002 |
| | | | JP | 2003512758 T | 02-04-2003 |
| | | | WO | 0129982 A1 | 26-04-2001 |
| | | | US | 2001028677 A1 | 11-10-2001 |

EPO FORM P0459

For more details about this annex : see Official Journal of the European Patent Office, No. 12/82